# FASCICULE DE BREVET EUROPEEN

(11) **EP 2 842 185 B1**
(45) Date de publication et mention de la délivrance du brevet: **14.06.2017**
(21) Numéro de dépôt: 13725823.2
(22) Date de dépôt: 23.04.2013
(51) Int. Cl.: H01M 2/06, H01M 2/08, H01M 2/30, H01M 4/505, H01M 4/525, H01M 10/0525, H01M 4/58, H01M 4/485

(54) **TRAVERSEE FORMANT BORNE POUR ACCUMULATEUR ELECTROCHIMIQUE AU LITHIUM ET ACCUMULATEUR ASSOCIE**
BUCHSE ZUR FORMUNG EINES ANSCHLUSSES FÜR EINE LITHIUMSPEICHERBATTERIE UND ZUGEHÖRIGE SPEICHERBATTERIE
BUSHING FORMING A TERMINAL FOR A LITHIUM STORAGE BATTERY AND RELATED STORAGE BATTERY

(30) Priorité: 24.04.2012 FR 1253767
(43) Date de publication de la demande: 04.03.2015
(73) Titulaire: Commissariat à l'Énergie Atomique et aux Énergies Alternatives, 75015 Paris (FR)
(72) Inventeur: DEWULF, Frédéric, F-38500 Voiron (FR); JOST, Pierre, F-38220 SAINT-PIERRE DE MESAGE (FR)
(74) Mandataire: Nony
(86) Numéro de dépôt international: PCT/IB2013/053184
(87) Numéro de publication internationale: WO 2013/160820

(56) Documents cités:
- EP-A1- 1 653 530
- FR-A1- 2 798 227

## Description

### Domaine technique

La présente invention concerne une traversée formant borne pour accumulateur électrochimique au lithium, tel qu'un accumulateur lithium-ion et un tel accumulateur.

L'invention a trait plus particulièrement à un accumulateur électrochimique au lithium-ion (Li-ion) de forte capacité, typiquement supérieur à 10 Ampère-heure (Ah), et présentant une aptitude au passage de forts courants, typiquement supérieurs à 100 A.

L'invention concerne plus particulièrement la réalisation d'une traversée d'un boitier pour permettre à l'accumulateur Li-ion de forte capacité qui en est équipé de pouvoir délivrer des forts courants.

Par « traversée », on précise qu'on entend le sens usuel, c'est-à-dire un dispositif servant à faire passer un élément conducteur électrique à travers une paroi et en isolant le conducteur de cette paroi.

### Art antérieur

Tel que représentée schématiquement, une batterie ou accumulateur lithium-ion comporte usuellement au moins une cellule électrochimique constituée d'un constituant d'électrolyte entre une électrode positive ou cathode et une électrode négative ou anode, un collecteur de courant connecté à la cathode, un collecteur de courant connecté à l'anode et enfin, un emballage agencé pour contenir la cellule électrochimique avec étanchéité tout en étant traversé par une partie des collecteurs de courant.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode est très souvent constituée de carbone graphite ou en Li₄TiO₅O₁₂ (matériau titanate), éventuellement également à base de silicium ou de composite formé à base de silicium.

Le collecteur de courant connecté à l'électrode positive est en général en aluminium.

Le collecteur de courant connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Une batterie ou accumulateur Li-ion comporte un emballage rigide lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide est constitué d'un boitier métallique, typiquement en acier inoxydable (inox 316L ou inox 304), en aluminium (Al 1050 ou Al 3003) ou en titane.

Actuellement, deux types de boitier rigide sont fabriqués.

Le premier type consiste en un boitier rigide constitué avec un fond usiné et un couvercle soudés entre eux sur leur périphérie par laser. Les collecteurs de courant sont constitués en partie par des fils métalliques ou pions. Le ou les pions est (sont) soudé par soudure électrique ou par ultrasons à la partie du collecteur de courant correspondant connectée elle-même à une des électrodes d'une cellule électrochimique ou d'un empilement de cellules électrochimiques. Pour réaliser l'isolation électrique entre le couvercle métallique du boitier et le pion métallique, une bille de verre enverre le pion en constituant ainsi ce qui est communément appelée une traversée verre-métal (TVM). En outre, pour réaliser l'étanchéité avec le couvercle du boitier, une bague autour de la bille de verre et en général dans le même métal que celui du boitier est soudée à ce dernier. Certaines configurations prévoient d'utiliser une seule TVM, le boitier constituant l'autre borne aussi appelé pôle de l'accumulateur.

Le deuxième type consiste également en un boitier rigide constitué avec un godet embouti et un couvercle soudés entre eux sur leur périphérie par laser. En revanche, les collecteurs de courant comprennent une traversée avec une partie faisant saillie sur le dessus du boitier et qui forme une borne aussi appelée pôle apparent de la batterie.

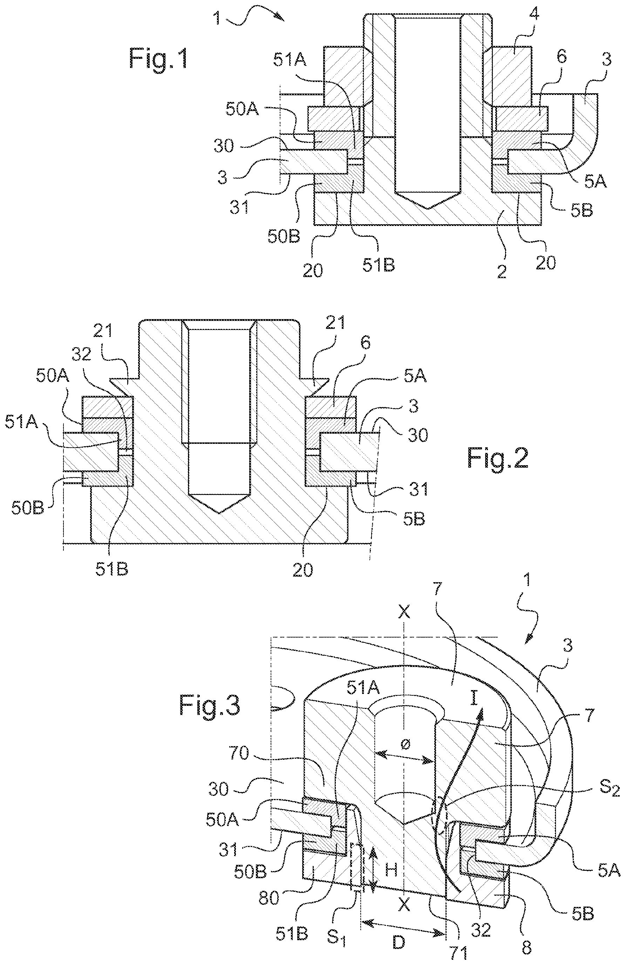

Un premier exemple d'assemblage d'une telle traversée 1 formant borne avec le collecteur de courant 2 et avec le couvercle 3 d'un boitier est montré en figure 1: le collecteur 2, typiquement en cuivre sous la forme d'une pièce mâle filetée intérieurement est fixé par vissage à l'aide d'un écrou 2 de type M5 ou M8. Deux rondelles 5A, 5B en matériau isolant électrique, typiquement en polypropylène superposées l'une sur l'autre, sont intercalées l'une 5A entre le couvercle 3 et l'autre rondelle 6 d'appui de l'écrou 4 et l'autre 5B entre le couvercle 3 et le collecteur 2. Ces rondelles 5A, 5B réalisent l'étanchéité et l'isolation électrique du collecteur 2 par rapport au couvercle 3 de boitier. Plus précisément, dans ce premier exemple illustré, les deux rondelles isolantes 5A, 5B sont identiques et comportent chacune une portion d'appui 50A, 50B et une portion de guidage et centrage 51A, 51B. La portion d'appui 50A est en appui surfacique avec pression à la fois contre la face 30 de la paroi du couvercle 3 et contre la rondelle d'appui 6 de l'écrou 4. De manière analogue, la portion d'appui 50B est en appui surfacique à la fois contre la face opposée 31 du couvercle 3 et contre la portion d'appui 20 du collecteur de courant 2. Les portions de guidage et centrage 51A, 51B sont, quant à elles, à la fois en appui surfacique avec pression contre le bord de l'orifice traversant 32 du couvercle 3 et contre le collecteur 2. Ces portions de guidage et centrage 51A, 51B permettent de guider et centrer à la fois les rondelles 5A, 5B dans l'orifice traversant 32 et le collecteur mâle 2 dans lesdites rondelles 5A, 5B.

Un deuxième exemple d'assemblage d'une traversée 1 formant borne avec le collecteur de courant 2 et avec le couvercle 3 d'un boitier est montré en figure 2 et est connu du document EP1654530. Le collecteur 2, typiquement en cuivre, sous la forme d'une pièce mâle filetée intérieurement est fixé par sertissage du collecteur sur la rondelle d'appui 6. On retrouve ici également les deux rondelles 5A, 5B en matériau isolant électrique, avec leurs portions d'appui 50A, 50B et leurs portions de guidage et de centrage 51A, 51B qui sont agencées à l'identique et réalisent les mêmes fonctions que dans le premier exemple. En revanche, la fixation par sertissage selon ce deuxième exemple se fait sans utilisation de pièce supplémentaire, tel que l'écrou 4 de vissage du premier exemple. En effet, le sertissage est réalisé par écrasement mécanique d'une portion de sertissage 21 disposée sur l'extérieur de la partie cylindrique du collecteur 2, contre la rondelle d'appui 6.

Un troisième exemple d'assemblage d'une traversée formant borne avec le collecteur de courant et avec le couvercle d'un boitier est décrit dans la demande de brevet FR 2798227.

Comme dit précédemment, une batterie ou accumulateur Li-ion utilise un couple de matériaux à l'anode et à la cathode lui permettant de fonctionner à un niveau de tension élevé, typiquement égal à 3,6 Volt.

D'autres couples de matériaux sont possibles et délivrent un niveau de tension moindre. A titre d'exemple, un couple de matériaux LiFePO₄/graphite délivre un niveau de tension moyenne en fonctionnement compris entre 3,0 et 3,2 Volt. A titre d'exemple également, un couple de matériaux LiFePO₄/Li₄TiO₅O₁₂ délivre un niveau de tension moyenne en fonctionnement compris entre 1,6 et 1,8 Volt.

Les inventeurs ont été confrontés à un besoin de proposer un accumulateur Li-ion muni d'un boitier avec les bornes de connexion permettant de faire passer des courants très élevés, typiquement supérieurs à 100A, avec des niveaux de tension moyenne inférieurs à celui traditionnellement utilisé égal à 3,6 Volt. En effet, pour des applications dites de puissance, un accumulateur de forte capacité doit délivrer à ses bornes une puissance très élevée, c'est-à-dire un produit du courant par la tension très élevés. Or, du fait de l'utilisation de couples à niveaux de tension moindre, il est nécessaire de délivrer des courants plus élevés que traditionnellement.

Les inventeurs sont parvenus à la conclusion qu'aucune des traversées proposées selon l'état de l'art à travers un boitier d'emballage d'accumulateur Li-ion, telles que décrites ci-dessus, n'était adaptée pour faire passer des courants très élevés, typiquement supérieurs à 100A. En particulier, la solution proposée dans la demande FR 2798227 précitée n'est pas adaptée au passage de courants élevés, car le faire reviendrait à engendrer une perte de contact par décohésion entre la pièce mâle et de la pièce femelle au cours de l'échauffement engendrant des dilatations thermiques, notamment du fait des géométries desdites pièces et de l'absence de soudure laser...

Par ailleurs, quel que soit le type d'assemblage envisagé, il est nécessaire de prévoir une parfaite étanchéité de la traversée et ce pendant toute la durée d'utilisation d'un accumulateur li-ion, usuellement supérieure à 5 années.

Il existe donc un besoin d'améliorer une traversée formant borne pour accumulateur électrochimique au lithium-ion, et réalisée au travers d'un boitier de l'accumulateur, notamment en vue de permettre à un accumulateur de forte capacité qui en est équipé de pouvoir délivrer des forts courants et en vue d'obtenir une parfaite étanchéité de la traversée et ce pendant toute la durée d'utilisation.

### Exposé de l'invention

Pour ce faire, l'invention concerne, sous l'un de ses aspects, une traversée formant borne pour accumulateur électrochimique au lithium-ion (Li-ion), réalisée à travers un orifice débouchant de part et d'autre d'une paroi comportant deux faces opposées, comportant:
- deux rondelles électriquement isolantes, comportant chacune une portion d'appui surfacique en appui avec pression contre l'une des faces de la paroi et une portion de guidage en saillie par rapport à la portion d'appui, la portion de guidage étant en appui avec pression contre le bord de l'orifice de la paroi,
- deux pièces électriquement conductrices, dont une pièce mâle ajustée serrée dans la pièce femelle, chacune des pièces conductrices comportant une portion d'appui en appui surfacique avec pression contre une portion d'appui des rondelles, la pièce femelle étant en outre en appui surfacique avec pression contre les portions de guidage des rondelles,
traversée dans laquelle le(s) matériau(x) des pièces est (sont) adapté(s) et leurs sections sont dimensionnées de sorte à permettre le passage d'un courant électrique de valeur au moins égale à 100A.

Autrement dit, selon l'invention, on réalise en combinaison :
- un ajustement serré entre pièces mâle et femelle de connexion électrique qui permet à la fois la compression axiale (selon l'axe de la traversée) des deux rondelles isolantes et un serrage radial des pièces mâles et femelles entre elles et des deux rondelles isolantes entre la pièce femelle et le bord de l'orifice, ce qui garantit une parfaite étanchéité et un très bon maintien mécanique de la traversée à la paroi;
- un choix de matériau(x) des pièces mâle et femelle et de leurs sections pour permettre le passage de forts courants par la traversée.

Par « parfaite étanchéité », on entend une étanchéité selon un niveau parmi les plus stricts requis, typiquement inférieur à 10⁻⁸ mbar.l/s pour de l'hélium,

Avantageusement, le(s) matériau(x) des pièces peuvent être adaptés et leurs sections dimensionnées de sorte à permettre le passage d'un courant électrique jusqu'à une valeur égale à 500A.

Selon un mode de réalisation avantageux, la pièce femelle est débouchante et est soudée par un cordon continu de soudure avec la pièce mâle à l'extrémité apparente de cette dernière. Par « extrémité apparente », on entend l'extrémité de la pièce mâle visible du côté de la pièce femelle lorsque l'ajustement serré est réalisé. Le soudage peut être électrique ou réalisé par laser. Un tel mode est avantageux car il permet de renforcer définitivement la liaison mécanique entre l'extrémité de la pièce mâle et la base de la pièce femelle. En outre, un cordon continu de soudure est parfaitement étanche et vient compléter et garantir la parfaite étanchéité de la traversée de paroi selon l'invention, et ce pendant toute la durée d'utilisation d'un accumulateur Li-ion. Outre l'étanchéité, la soudure vient garantir la cohésion mécanique au regard des dilatations thermiques provoqués par le chauffage de la borne sous l'effet de fort courant. De préférence, selon ce mode avantageux, l'agencement de la pièce mâle dans la pièce femelle est tel que la différente de hauteur entre extrémité de pièce mâle et extrémité de pièce femelle est inférieure à 0,3mm, que la pièce mâle soit en saillie ou soit rentrée par rapport à la pièce femelle. En particulier, on prévoit avantageusement que les extrémités de pièce mâle et femelle définissent une surface plane, c'est-à-dire avec une différence de hauteur entre elles sensiblement nulle. Un tel agencement avec une différence de hauteur très faible permet d'une part de favoriser le soudage des deux pièces mâle et femelle entre elles et d'autre part la soudure ultérieure de la connectique.

De préférence, les pièces mâle et femelle sont réalisées dans le même matériau. Elles peuvent être réalisées en cuivre électrolytique CuAl ou en cuivre faiblement allié au tellure CuTe.

Les rondelles isolantes peuvent être réalisées avantageusement en polyéthèrimide (PEI), dont les propriétés mécaniques et thermiques sont compatibles avec un passage de forts courants.

De préférence, la section de contact S1 entre la pièce mâle et la pièce femelle est supérieure à 8 mm², de préférence supérieure à 10 mm².

De préférence encore, la plus petite section transversale S2 de la pièce mâle est supérieure à 8 mm², de préférence supérieure à 10 mm².

L'invention concerne également sous un autre de ses aspects, une traversée formant borne pour accumulateur électrochimique au lithium-ion (Li-ion), réalisée à travers un orifice débouchant de part et d'autre d'une paroi comportant deux faces opposées, comportant:
- deux rondelles électriquement isolantes, comportant chacune une portion d'appui surfacique en appui avec pression contre l'une des faces de la paroi et une portion de guidage en saillie par rapport à la portion d'appui, la portion de guidage étant en appui avec pression contre le bord de l'orifice de la paroi,
- deux pièces électriquement conductrices, dont une pièce mâle ajustée serrée dans la pièce femelle, chacune des pièces conductrices comportant une portion d'appui en appui surfacique avec pression contre une portion d'appui des rondelles, la pièce femelle étant en outre en appui surfacique avec pression contre les portions de guidage des rondelles,
traversée dans laquelle la pièce femelle est débouchante et est soudée par un cordon continu de soudure avec la pièce mâle à l'extrémité apparente de cette dernière.

L'invention concerne également, sous encore un autre aspect, une batterie ou accumulateur au lithium-ion (Li-ion) comportant un boitier avec un couvercle à travers lequel une traversée telle que décrite précédemment est réalisée.

Selon une caractéristique, la pièce mâle est de type filetée intérieurement et fait saillie vers l'extérieur du boitier.

Le couvercle peut être en aluminium, tel que l'aluminium 1050 ou 3003.

Le matériau d'électrode(s) négative(s) peut être choisi dans le groupe comportant le graphite, l'oxyde de titanate de lithium Li₄TiO₅O₁₂; et le matériau d'électrode(s) positive(s) peut être choisi dans le groupe comportant LiFePO₄, LiCoO₂, LiNi_{0.33}Mn_{0.33}Co_{0.33}O₂.

L'invention concerne enfin un procédé de réalisation d'une traversée telle que décrite précédemment, selon lequel on réalise les étapes suivantes :
a/ insertion à travers l'orifice, depuis chacune des deux faces opposées de la paroi, d'une des portions de guidage des rondelles, de sorte qu'elles soient en appui contre le bord de l'orifice de la paroi,
b/ insertion, depuis une face de la paroi, de la pièce femelle dans une des rondelles;
c/ emmanchement à force, depuis la face opposée de la paroi, de la pièce mâle, de sorte que chacune des portions d'appui des pièces mâle et femelle est en appui avec pression contre une portion d'appui des rondelles elle-même en appui avec pression contre le bord de l'orifice, la pièce femelle étant en outre en appui avec pression contre les portions de guidage des rondelles elles-mêmes en appui avec pression contre le bord de l'orifice de la paroi.

L'emmanchement à force permettant d'obtenir les appuis avec pression, selon l'étape c/ est avantageusement réalisé sous presse avec un effort supérieur ou égal à 1 tonne-force.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue en coupe axiale d'une traversée formant borne d'un accumulateur Li-ion selon un exemple de l'état de l'art;
- la figure 2 est une vue en coupe axiale d'une traversée formant borne d'un accumulateur Li-ion selon un autre exemple de l'état de l'art;
- la figure 3 est une vue en coupe axiale et en perspective d'une traversée formant borne d'un accumulateur Li-ion selon un exemple selon l'invention;
- la figure 4 illustre les courbes d'évolution de la température en fonction du temps selon l'exemple de la figure 3 et avec différents dimensionnements ;
- la figure 4A est une vue agrandie de la figure 4 ;
- la figure 5 est une vue en perspective d'un boitier cylindrique d'accumulateur Li-ion, avec un couvercle au travers duquel est réalisé une traversée formant borne selon l'invention;
- les figures 5A et 5B sont des vues en perspective respectivement du dessus et du dessous d'un couvercle à section circulaire fixé sur un boitier de la figure 5;
- la figure 5C est une reproduction d'une photographie du dessous d'un couvercle à section circulaire fixé sur un boitier comme selon la figure 5;
- la figure 6 est une vue en perspective d'un boitier de forme prismatique d'accumulateur Li-ion, avec un couvercle au travers duquel est réalisé une traversée formant borne selon l'invention.

Les figures 1 et 2 sont relatives à deux exemples différents de traversée formant borne d'accumulateur Li-ion selon l'état de l'art. Ces figures 1 et 2 ont déjà été commentées en préambule et ne le sont donc pas plus ci-après.

Par souci de clarté, les mêmes références désignant les mêmes éléments de traversées selon l'état de l'art et selon l'invention sont utilisées pour toutes les figures 1 à 6.

Dans l'ensemble de la présente demande, les termes « inférieur », « supérieur », « bas », « haut », « dessous » et « dessus » sont à comprendre par référence par rapport à un boitier d'accumulateur Li-ion positionné à la verticale avec son couvercle sur le dessus et la traversée faisant saillie à l'extérieur du boitier vers le haut.

On a représenté en figure 3, un exemple de traversée formant borne 1 d'un accumulateur Li-ion, selon l'invention.

La traversée 1 selon l'invention est réalisée à travers un orifice 32 débouchant de part et d'autre d'un couvercle 3 d'un boitier d'accumulateur Li-ion. Ce couvercle comporte deux faces opposées 30, 31. La traversée 1 s'étend selon un axe X parallèle à l'axe du boitier de l'accumulateur Li-ion.

La traversée 1 selon l'invention comporte tout d'abord deux rondelles 5A, 5B électriquement isolantes identiques. Les rondelles 5A, 5B représentées ont un coefficient de résistivité électrique élevé, supérieur à 1. 10¹⁵ µohm.cm. Elles peuvent être en polyéthèrimide PEI. Chaque rondelle comporte une portion d'appui 50A, 50B et une portion de guidage 51 A, 51 B en saillie par rapport à la portion d'appui. La portion d'appui de la rondelle 5A supérieure est en appui surfacique avec pression contre la face supérieure 30 du couvercle 3 et sa portion de guidage 51A est en appui avec pression contre le bord de l'orifice 32 du couvercle 3. De manière similaire, la portion d'appui de la rondelle 5B inférieure est en appui surfacique avec pression contre la face inférieure 30 du couvercle 3 et sa portion de guidage 51B est en appui avec pression contre le bord de l'orifice 32 du couvercle 3.

La traversée1 selon l'invention comporte une pièce mâle 7 ajustée serrée dans une pièce femelle 8. La pièce mâle 7 représenté est filetée intérieurement, typiquement selon un diamètre Ø de type M5. Les pièces mâle 7 et femelle 8 représentées sont électriquement conductrices: autrement dit, elles ont un faible coefficient de résistivité électrique, typiquement compris entre 1,7 et 1,9 µohm.cm. Elles peuvent être en cuivre électrolytique CuA1 ou en cuivre faiblement allié au tellure Cu-Te. Elles peuvent être également constituées dans le même matériau que le couvercle 3, typiquement en aluminium 1050 ou 3003 dont le coefficient de résistivité électrique et de l'ordre de 2,6 µohm.cm. Dans ce cas, on veille bien entendu à ce que le matériau soit chimiquement compatible avec les matériaux constituant la ou les cellules électrochimiques de l'accumulateur Li-ion logé dans le boitier. De préférence, ces pièces mâle 7 et femelle 8 sont réalisées dans le même matériau.

Chacune des pièces mâle 7 et femelle comporte une portion d'appui 70, 80. La portion d'appui 70 de la pièce mâle 7 est en en appui surfacique avec pression contre la portion d'appui 50A de la rondelle supérieure 5A, tandis que la portion d'appui 80 de la pièce femelle est en appui surfacique avec pression contre la portion d'appui 50B de la rondelle inférieure 5B. Tel qu'illustré en figure 3, la pièce femelle 8 est en outre en appui surfacique avec pression contre les portions de guidage 51 A, 51B des rondelles.

Selon l'invention, le(s) matériau(x) des pièces mâle 7 et femelle 8 est (sont) choisi(s) et leur sections dimensionnées de sorte à permettre le passage d'un courant électrique de valeur au moins égale à 100A. Ce courant élevé pouvant traverser une traversée 1 selon l'invention est un courant continu pendant une durée au minimum de 3 minutes.

On a symbolisé par le tracé fléché en noir le trajet d'un courant I supérieur à 100A à travers la traversée 1 selon l'invention.

Le dimensionnement des pièces mâle 7 et femelle 8 représentées en figure 3 porte sur les dimensions de longueur de chacune des pièces 7, 8, la hauteur H de contact entre les deux pièces 7, 8 définissant une section S1, symbolisée par un rectangle en pointillés, et enfin l'épaisseur de paroi sur la pièce femelle 8 définissant une section S2, symbolisée par un cercle en pointillés. On précise que la section S1 est une bande de hauteur H sur la périphérie de la pièce mâle 7, soit S1 = π*H*D. De même S2, correspond à la plus petite section transversale de la pièce mâle 7, c'est-à-dire transversalement à son axe X, au niveau de l'alésage de diamètre Ø.

De préférence, S1 est supérieur à 8 mm², de préférence encore supérieur à 10 mm². De préférence S2 est supérieur à 8 mm², de préférence encore supérieur 10 mm².

On a réalisé plusieurs traversées 1 comme celle illustrée en figure 3 mais selon différents dimensionnements N° 1 à 4. Ceux-ci ainsi que les différentes valeurs de courant I pouvant circuler à travers la traversée 1 sont indiquées dans le tableau ci-dessous, étant précisé d'une part que le diamètre D correspond à celui de la partie de la pièce mâle 8 qui définit la hauteur H de contact avec la pièce femelle 7 et d'autre part que le courant I doit être continu pendant une durée au minimum de 3 minutes.

| Dimensionnement de la traversée selon l'invention | 1 | 2 | 3 | 4 |
|---|---|---|---|---|
| N° | | | | |
| Diamètre D en mm | 6,0 | 7,0 | 8,0 | 9,0 |
| Section S1 en mm² | 14,3 | 26,0 | 40,5 | 56 |
| Section S2 en mm² | 40 | 52 | 60 | 67 |
| Courant I en A | 200-230 | 320-360 | 450-500 | > 500 |

On a fait des essais sur une traversée dimensionnée N°1, c'est-à-dire avec un diamètre D égal à 6mm, pour corroborer le choix des matériaux et le dimensionnement de leurs sections. Ces essais ont consisté à faire passer différents niveaux de courants, respectivement allant de 50 à 500A par augmentation de 50A pour passer d'un niveau à l'autre. Puis, on a fait des mesures de l'échauffement constaté dans la traversée en fonction du temps, c'est-à-dire son augmentation de température à compter de l'instant initial où le courant I est délivré à travers la pièce femelle 8 et circule comme symbolisé en figure 3. On précise que ces essais ont été réalisés pour une traversée 1 selon l'invention formant une borne négative. On précise que pour ces essais, les pièces mâle 7 et femelle sont en CuA1, les rondelles en PEI et la paroi 3 en aluminium 1050.

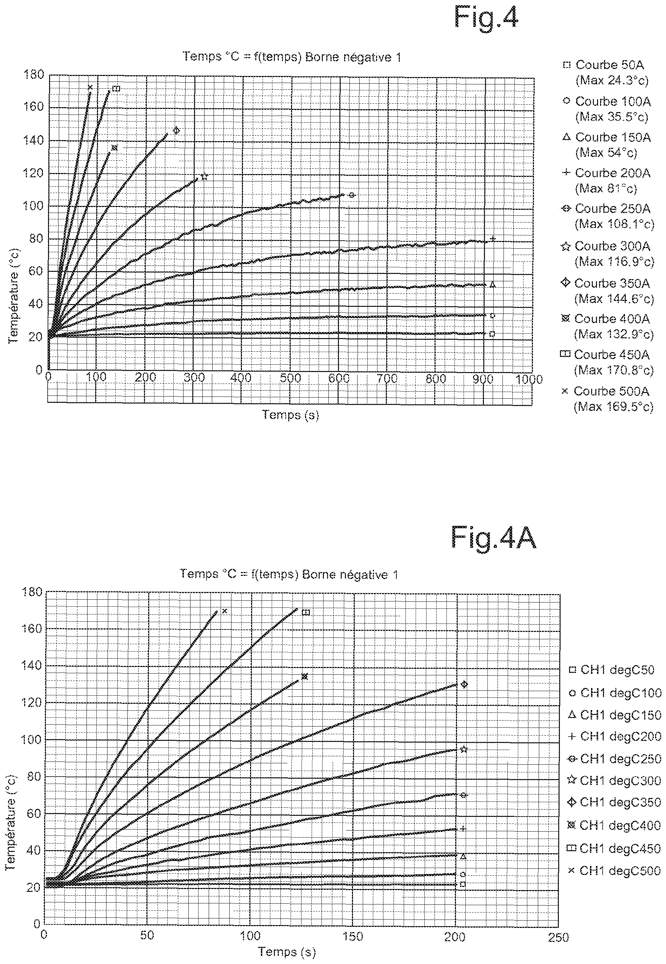

Les différentes courbes montrées en figures 4 et 4A illustrent les résultats de ces mesures d'échauffement.

De ces courbes, on peut constater que sous un courant de 200A, l'élévation de température mesurée est d'environ 30°C, et que sous un courant de 250A, elle est d'environ 50°C.

On peut en conclure que ces résultats de mesure montrent qu'il est possible pour une traversée 1 dimensionnée N° 1 de conduire:
- des courants très élevés au moins jusqu'à 500A ;
- des courants élevés compris entre 200 et 250A en continu pendant une durée conséquente sans élévation de température trop importante, qui a tendance d'ailleurs à se stabiliser au bout d'un certain temps.

Pour réaliser une traversée selon l'invention, on réalise les étapes suivantes.

On insère à travers l'orifice 32, depuis chacune des deux faces 30, 31 du couvercle 3, une des portions de guidage 51A, 51B des rondelles 5A, 5B de sorte qu'elles soient en appui contre le bord de l'orifice 32.

On insère, depuis la face inférieure 31 du couvercle 3, la pièce femelle 8 dans la rondelle inférieure 5B.

On emmanche à force la pièce mâle 7, depuis la face supérieure 30 opposée à la face inférieure 31 du couvercle 3. L'emmanchement à force permet d'avoir chacune des portions d'appui 70, 80 des pièces mâle 7 et femelle 8 en appui surfacique avec pression contre une portion d'appui 50A, 50B des rondelles 5A, 5B elle-même en appui avec pression contre le bord de l'orifice 32. En outre, la pièce femelle 8 est en appui avec pression contre les portions de guidage 51A, 51B des rondelles 5A, 5B, elles-mêmes en appui surfacique avec pression contre le bord de l'orifice 32.

Différents essais sous presse ont été réalisés avec différents efforts appliqués pour l'emmanchement à force. Ces essais ont montré qu'il est préférable d'appliquer un effort d'emmanchement à force au moins égal à 1 Tonne-force pour obtenir d'une part une parfaite étanchéité entre pièces 7, 8, rondelles 5A, 5B et couvercle 3 et d'autre part un serrage mécanique à froid très résistant entre pièces mâle 7 et femelle 8.

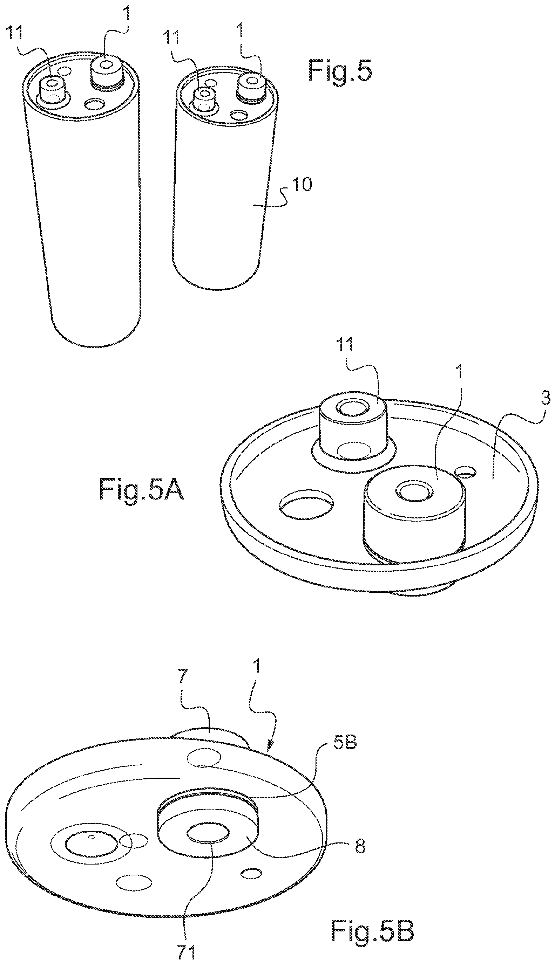

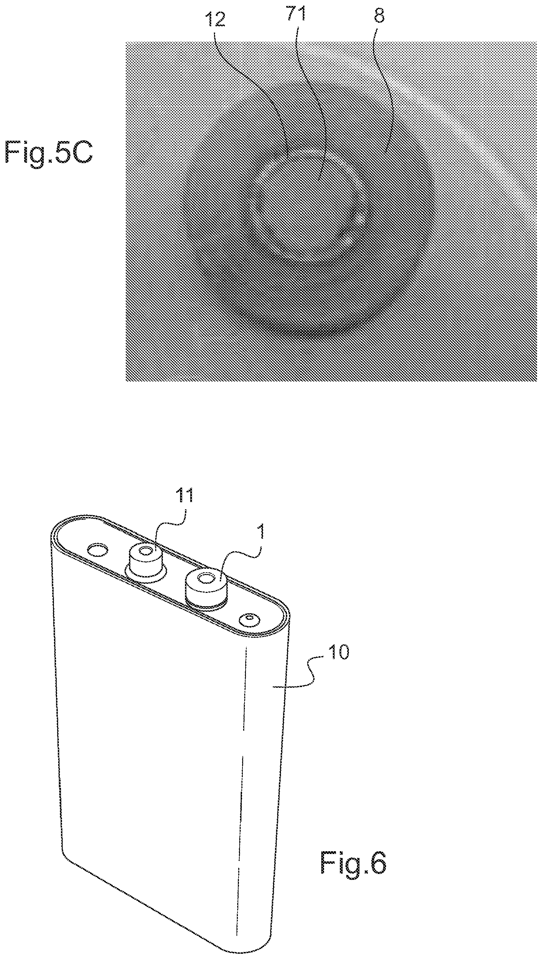

La traversée 1 selon l'invention peut être réalisée sur un couvercle 3 de boitier 10 d'accumulateur Li-ion aussi bien selon une géométrie cylindrique (figures 5 à 5C) que selon une géométrie prismatique (figure 6). Dans ces différentes configurations, la borne 1 selon l'invention est par exemple négative, la borne positive 11 pouvant être réalisée, par exemple directement par soudure, également sur le couvercle 3, comme illustré en figures 5 à 6.

Pour renforcer encore la liaison mécanique entre les pièces mâle 7 et femelle 8, il est avantageux de réaliser un cordon continu de soudure étanche 12 à la périphérie et en extrémité apparente 71 de la pièce mâle 7, comme illustré en figure 5C. Ce cordon continu 12 peut être réalisé par soudage électrique ou soudage par laser. Ce cordon continu 12 complète et garantit la parfaite étanchéité de la traversée 1 selon l'invention, et ce pendant toute la durée d'utilisation de l'accumulateur Li-ion, de préférence supérieure à 5 ans.

Bien que non précisé auparavant, on s'assure que la base de la pièce femelle 8, c'est-à-dire la section qui définit sa surface d'appui 80, présente une surface suffisante pour pouvoir relier électriquement une connectique interne au boitier et elle-même reliée électriquement au faisceau électrochimique usuellement appelé bobineau, constitué d'une ou plusieurs cellules électrochimiques. On peut réaliser la liaison électrique entre connectique interne et base 80 de la pièce femelle par soudage.

L'invention n'est pas limitée aux exemples qui viennent d'être décrits ; on peut notamment combiner entre elles des caractéristiques des exemples illustrés au sein de variantes non illustrées.

L'expression « comportant un » doit être comprise comme étant synonyme de « comportant au moins un », sauf si le contraire est spécifié.

## Revendications

1. Traversée (1) formant borne pour accumulateur électrochimique au lithium-ion (Li-ion), réalisée à travers un orifice (32) débouchant de part et d'autre d'une paroi (3) comportant deux faces opposées (30, 31), comportant:
- deux rondelles (5A, 5B) électriquement isolantes, comportant chacune une portion d'appui (50A, 50B) en appui surfacique avec pression contre l'une (30, 31) des faces de la paroi et une portion de guidage (51A, 51B) en saillie par rapport à la portion d'appui, la portion de guidage étant en appui avec pression contre le bord de l'orifice (32) de la paroi,
- deux pièces (7, 8) électriquement conductrices, dont une pièce mâle (7) ajustée serrée dans la pièce femelle (8), chacune des pièces conductrices comportant une portion d'appui (70, 80) en appui surfacique avec pression contre une portion d'appui (50A, 50B) des rondelles, la pièce femelle étant en outre en appui surfacique avec pression contre les portions de guidage (51A, 51B) des rondelles,
traversée dans laquelle le(s) matériau(x) des pièces est (sont) adapté(s) et leurs sections sont dimensionnées de sorte à permettre le passage d'un courant électrique de valeur au moins égale à 100A.

2. Traversée (1) selon la revendication 1, dans laquelle le(s) matériau(x) des pièces sont adaptés et leurs sections sont dimensionnées de sorte à permettre le passage d'un courant électrique jusqu'à une valeur égale à 500A.

3. Traversée (1) selon la revendication 1 ou 2, dans laquelle la pièce femelle est débouchante et est soudée par un cordon continu de soudure (12) avec la pièce mâle à l'extrémité apparente de cette dernière.

4. Traversée (1) selon l'une des revendications 1 à 3, dans laquelle les pièces mâle et femelle sont réalisées dans le même matériau.

5. Traversée (1) selon la revendication 4, dans laquelle les pièces mâle et femelle sont réalisées en cuivre électrolytique CuAl ou en cuivre faiblement allié au tellure CuTe.

6. Traversée (1) selon l'une des revendications précédentes, dans laquelle les rondelles isolantes sont réalisées en polyéthèrimide (PEI).

7. Traversée (1) selon l'une des revendications précédentes, dans laquelle la section de contact S1 entre la pièce mâle (7) et la pièce femelle (8) est supérieure à 8mm², de préférence supérieure à 10 mm².

8. Traversée (1) selon l'une des revendications précédentes, dans laquelle la plus petite section transversale S2 de la pièce mâle (7) est supérieure à 8mm², de préférence supérieure à 10 mm².

9. Batterie ou accumulateur au lithium-ion (Li-ion) comportant un boitier (10) avec un couvercle (3) à travers lequel une traversée (1) selon l'une quelconque des revendications 1 à 8 est réalisée.

10. Batterie ou accumulateur Li-ion selon la revendication 9, dans laquelle la pièce mâle (7) est de type filetée intérieurement et fait saillie vers l'extérieur du boitier (10).

11. Batterie ou accumulateur Li-ion selon revendication 9 ou 10, dans laquelle le couvercle est en aluminium, tel que l'aluminium 1050 ou 3003.

12. Batterie ou accumulateur Li-ion selon l'une des revendications 9 à 11, dans laquelle :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

13. Procédé de réalisation d'une traversée selon l'une quelconque des revendications 1 à 8, selon lequel on réalise les étapes suivantes :
a/ insertion à travers l'orifice (32), depuis chacune des deux faces (30, 31) opposées de la paroi (3), d'une des portions de guidage (51A, 51B) des rondelles (5A, 5B), de sorte qu'elles soient en appui contre le bord de l'orifice (32) de la paroi,
b/ insertion, depuis une face (31) de la paroi, de la pièce femelle (8) dans une des rondelles (5B);
c/ emmanchement à force, depuis la face opposée (30) de la paroi, de la pièce mâle (7), de sorte que chacune des portions d'appui (70, 80) des pièces mâle et femelle est en appui surfacique avec pression contre une portion d'appui (50A, 50B) des rondelles elle-même en appui avec pression contre le bord de l'orifice, la pièce femelle étant en outre en appui avec pression contre les portions de guidage (51A, 51B) des rondelles elles-mêmes en appui surfacique avec pression contre le bord de l'orifice de la paroi.

14. Procédé selon la revendication 13, selon lequel l'emmanchement à force selon l'étape c/ est réalisé sous presse avec un effort supérieur ou égal à 1 Tonne-force.

## Patentansprüche

1. Durchführung (1) zur Bildung einer Anschlussklemme eins elektrochemischen Lithium-Ionen-Akumulators, wobei die Durchführung eine Öffnung (32) durchsetzt, die sich zu beiden Seiten einer Wand (3) öffnet, die entgegengesetzte Seitenflächen (30, 31) aufweist, mit:
- zwei elektrisch isolierenden Scheiben (5A, 5B), die jeweils einen Anlageabschnitt (50A, 50B), der flächig und unter Druck an einer (30, 31) der Seitenflächen der Wand anliegt, und einem Führungsabschnitt (51A, 51B) aufweisen, der gegenüber dem Anlageabschnitt vorspringt, wobei der Führungsabschnitt in Druckberührung mit dem Rand der Öffnung (32) der Wand steht,
- zwei elektrisch leitenden Teilen (7, 8), von denen ein männlicher Teil (7) im Presssitz in einen weiblichen Teil (8) eingesetzt ist, wobei jeder der leitenden Teile einen Anlageabschnitt (70, 80) aufweist, der flächig und unter Druck an einem Anlageabschnitt (50A, 50B) der Scheiben anliegt, wobei der weibliche Teil außerdem flächig und unter Druck an den Führungsabschnitten (51A, 51B) der Scheiben anliegt,
bei welcher Durchführung das Material des Teils oder die Materialien der Teile so beschaffen sind und ihre Querschnitte so dimensioniert sind, dass sie den Fluss eines elektrischen Stromes mit einer Stromstärke von wenigstens 100 A zulassen.

2. Durchführung (1) nach Anspruch 1, bei der das Material des Teils oder die Materialien der Teile so beschaffen sind und ihre Querschnitte so dimensioniert sind, dass sie den Fluss eines elektrischen Stromes bis zu einer Stromstärke von 500 A zulassen.

3. Durchführung (1) nach Anspruch 1 oder 2, bei der der weibliche Teil sich öffnet und durch eine durchgehende Schweißnaht (12) mit dem männlichen Teil am sichtbaren Ende dieses letzteren verschweißt ist.

4. Durchführung (1) nach einem der Ansprüche 1 bis 3, bei der die männlichen und weiblichen Teile aus dem gleichen Material hergestellt sind.

5. Durchführung (1) nach Anspruch 4, bei der die männlichen und weiblichen Teile aus elektrolytischem Kupfer CuAl oder aus schwach mit Tellur legiertem Kupfer CuTe hergestellt sind.

6. Durchführung (1) nach einem der vorstehenden Ansprüche, bei der die isolierenden Scheiben aus Polyetherimid (PEI) hergestellt sind.

7. Durchführung (1) nach einem der vorstehenden Ansprüche, bei der der Kontaktquerschnitt S1 zwischen dem männlichen Teil (7) und dem weiblichen Teil (8) größer als 8 mm², vorzugsweise größer als 10 mm² ist.

8. Durchführung (1) nach einem der vorstehenden Ansprüche, bei der der kleinste Querschnitt S2 des männlichen Teils (7) größer als 8 mm², vorzugsweise größer als 10 mm² ist.

9. Lithium-Ionen-Batterie oder -Akkumulator mit einem Gehäuse (10) mit einem Deckel (3), durch den eine Durchführung (1) nach einem der Ansprüche 1 bis 8 hindurchgeht.

10. Lithium-Ionen-Batterie oder -Akkumulator nach Anspruch 9, bei dem der männliche Teil (7) ein Innengewinde aufweist und nach außen von dem Gehäuse (10) vorspringt.

11. Lithium-Ionen-Batterie oder -Akkumulator nach Anspruch 9 oder 10, bei dem der Deckel aus Aluminium gebildet ist, etwa aus Aluminium 1050 oder 3003.

12. Lithium-Ionen-Batterie oder -Akkumulator nach einem der Ansprüche 9 bis 11, bei dem:
- das Material der negativen Elektrode(n) ausgewählt ist aus der Gruppe umfassend Graphit, Lithium, Titanoxd Li₄TiO₅O₁₂;
- das Material der positiven Elektrode(n) ausgewählt ist aus der Gruppe umfassend LiFePO₄, LiCoO₂, LiNi_{0,33}Mn_{0,33}Co_{0,33}O₂.

13. Verfahren zur Bildung einer Durchführung nach einem der Ansprüche 1 bis 8, bei dem die folgenden Schritte ausgeführt werden:
a) Durchstecken durch die Öffnung (32), von jeder der beiden entgegengesetzten Seitenflächen (30, 31) der Wand (3) aus, eines der Führungsabschnitte (51A, 51B) der Scheiben (5A, 5B), derart, dass sie an dem Rand der Öffnung (32) der Wand anliegen,
b) Einstecken, von einer Seitenfläche (31) der Wand aus, des weiblichen Teils (8) in eine der Scheiben (5B);
c) Einpressen, von der entgegengesetzten Seite (30) der Wand aus, des männlichen Teils (7), derart, dass jeder der Anlageabschnitte (70, 80) der männlichen und weiblichen Teile flächig und unter Druck an einem Anlageabschnitt (50A, 50B) der Scheiben anliegt, die ihrerseits unter Druck an dem Rand der Öffnung anliegen, wobei der weibliche Teil außerdem unter Druck an den Führungsabschnitten (51A, 51B) der Scheiben anliegt, die ihrerseits flächig und unter Druck an dem Rand der Öffnung der Wand anliegen.

14. Verfahren nach Anspruch 13, bei dem das Einpressen in Schritt c) unter Druck mit einer Kraft größer oder gleich 1 Tonne-Kraft erfolgt.

## Claims

1. A bushing (1) forming a terminal for a lithium-ion (Li-ion) storage battery, formed through an orifice (32) opening on either side of a wall (3) having two opposite faces (30, 31), comprising:
- two electrically insulating washers (5A, 5B), each having a bearing portion (50A, 50B) bearing with its surface under pressure against one (30, 31) of the faces of the wall, and a guiding portion (51A, 51B) projecting from the bearing portion, the guiding portion bearing with pressure against the edge of the orifice (32) of the wall,
- two electrically conductive pieces (7, 8), of which a male piece (7) is fitted tightly in the female piece (8), each of the conductive pieces having a bearing portion (70, 80) bearing with its surface under pressure against a bearing portion (50A, 50B) of the washers, the female piece furthermore bearing with its surface under pressure against the guiding portions (51A, 51B) of the washers,
in which bushing the material(s) of the pieces is (are) adapted, and their cross sections are dimensioned, in order to allow an electric current with a value at least equal to 100 A to flow through.

2. The bushing (1) as claimed in claim 1, wherein the material(s) of the pieces is (are) adapted, and their cross sections are dimensioned, in order to allow an electric current with a value at most equal to 500 A to flow through.

3. The bushing (1) as claimed in claim 1 or 2, wherein the female piece is open and is welded by a continuous weld bead (12) to the male piece on the emergent end of the latter.

4. The bushing (1) as claimed in one of claims 1 to 3, wherein the male and female pieces are made of the same material.

5. The bushing (1) as claimed in claim 4, wherein the male and female pieces are made of electrolytic copper CuA1 or of copper weakly alloyed with tellurium, CuTe.

6. The bushing (1) as claimed in one of the preceding claims, wherein the insulating washers are made of polyetherimide (PEI).

7. The bushing (1) as claimed in one of the preceding claims, wherein the contact cross section S1 between the male piece (7) and the female piece (8) is greater than 8 mm², preferably greater than 10 mm².

8. The bushing (1) as claimed in one of the preceding claims, wherein the smallest cross section S2 of the male piece (7) is greater than 8 mm², preferably greater than 10 mm².

9. A lithium-ion (Li-ion) battery or storage battery comprising a housing (10) with a cover (3) through which a bushing (1) as claimed in any one of claims 1 to 8 is formed.

10. The Li-ion battery or storage battery as claimed in claim 9, wherein the male piece (7) is of the internally threaded type and projects outside the housing (10).

11. The Li-ion battery or storage battery as claimed in claim 9 or 10, wherein the cover is made of aluminum, such as aluminum 1050 or 3003.

12. The Li-ion battery or storage battery as claimed in one of claims 9 to 11, wherein:
- the material of the negative electrode(s) is selected from the group comprising graphite, lithium, titanate oxide Li₄TiO₅O₁₂;
- the material of the positive electrode(s) is selected from the group comprising LiFePO₄, LiCoO₂, LiNi_{0.33}Mn_{0.33}Co_{0.33}O₂.

13. A method for producing a bushing as claimed in any one of claims 1 to 8, according to which the following steps are carried out:
a/ insertion through the orifice (32), from each of the two opposite faces (30, 31) of the wall (3), of one of the guiding portions (51A, 51B) of the washers (5A, 5B), in such a way that they bear against the edge of the orifice (32) of the wall,
b/ insertion, from one face (31) of the wall, of the female piece (8) into one of the washers (5B);
c/ force-fitting, from the opposite face (30) of the wall, of the male piece (7), in such a way that each of the bearing portions (70, 80) of the male and female pieces bears with its surface under pressure against a bearing portion (50A, 50B) of the washers, which itself bears with pressure against the edge of the orifice, the female piece furthermore bearing with pressure against the guiding portions (51A, 51B) of the washers, which themselves bear with their surface under pressure against the edge of the orifice of the wall.

14. The method as claimed in claim 13, wherein the force-fitting according to step c/ is carried out by pressing with a force greater than or equal to 1 metric ton-force.
